# EUROPEAN PATENT APPLICATION

(11) **EP 4 817 580 A1**
(43) Date of publication of application: **07.10.2026**
(21) Application number: 25202907.9
(22) Date of filing: 17.09.2025
(51) Int. Cl.: A61G 3/06, B60P 1/43

(54) **FOLDABLE RAMP WITH SEPARATE PLATFORM SIDE WALL, LIGHT SOURCE AND/OR PAIR OF CONNECTORS FOR WHEELCHAIR ACCESS TO A PASSENGER CAR REAR DOOR**

(30) Priority: 04.04.2025 EP 25168642
(71) Applicant: API CZ s.r.o., 391 76 Slapy (CZ)
(72) Inventor: Bartos, Miroslav, 39001 Tabor (CZ); Huisl, Marek, 39165 Bechyne (CZ)
(74) Representative: Schmid, Nils T.F.

(57) **Abstract**

The present invention relates to a foldable ramp for wheelchair access to a passenger car rear door, comprising a platform which can be arranged in several positions including an entry position wherein the platform is folded out of the car to allow wheelchair access to the car, a transport position wherein the platform is arranged in the car in an upright position and a passive position wherein the platform is arranged in the car in a lying position, wherein the platform comprises a platform floor and at least one platform side wall protruding from the platform floor **characterised in that** the at least one platform side wall and the platform floor are separate parts.

## Description

The present disclosure relates to a foldable ramp for wheelchair access to passenger car rear doors. In particular, the disclosure pertains to a foldable ramp with a platform that can be positioned in multiple configurations, featuring separate platform floor and side wall components, incorporating light or sound sources with adaptable connectivity for enhanced accessibility and safety.

In the field of wheelchair accessibility for passenger vehicles, it is common to use ramps that facilitate the entry and exit of wheelchair users. Known systems typically involve fixed or foldable ramps that can be deployed from the rear or side doors of vehicles. These ramps are designed to provide a smooth transition from the ground to the vehicle floor, ensuring that wheelchair users can easily and safely access the vehicle. Despite the widespread use of these ramps, there are several challenges and limitations associated with their design and functionality.

One common issue with existing wheelchair ramps is their bulkiness and weight, which can make them difficult to handle and store when not in use. Many ramps are constructed as single, integrated units, which can be cumbersome to fold and unfold. Additionally, the materials used in the construction of these ramps often contribute to their overall weight, making them less portable and more challenging to maneuver. This can be particularly problematic for individuals with limited strength, who may struggle to deploy and stow the ramp without assistance.

Another significant challenge with current wheelchair ramps is their lack of adaptability and customization. Many ramps, such as the one described in JP 452 726 3, are designed with a one-size-fits-all approach, which might provide multiple functions but may not accommodate the specific needs of different users or vehicles. For example, the width and length of the ramp may not be adjustable, leading to compatibility issues with various vehicle models or wheelchair sizes. Other ramps, such as the one described in CN 218 257 940 U, are adjustable in width and length but are not easy to assemble and lack potential for integrating further functions. Furthermore, the surface of the ramp may not provide adequate traction, increasing the risk of slips and falls, especially in wet or icy conditions.

Safety is also a major concern with existing wheelchair ramps. Known systems often lack features that enhance visibility and alert users to potential hazards. Some ramp systems, such as the one disclosed in WO 2024 012 964 0, make use of light or sound signals in case of maloperation. However, known systems lack proper signalling in low-light environments or when the ramp is being used by individuals with, e.g. visual or auditory, impairments.

Despite the substantial advances in the field of wheelchair ramps for passenger vehicles, there remains a need for improved solutions that address the issues of weight, adaptability, safety, and ease of assembly.

It is therefore an object of the present disclosure to overcome the disadvantages of the prior art, in particular to provide a foldable ramp for wheelchair access to a passenger car that at least partially overcomes the disadvantages of known systems, in particular that can be easily adapted to cars of different size, provides increased potential for the integration of further functions, is easy to assemble, is cheap to manufacture and increases safety for individuals using the foldable ramp or being in its vicinity.

A first aspect of the invention provides a foldable ramp for wheelchair access to a passenger car rear door, comprising a platform which can be arranged in several positions including an entry position wherein the platform is folded out of the car to allow wheelchair access to the car, a transport position wherein the platform is arranged in the car in an upright position and a passive position wherein the platform is arranged in the car in a lying position, wherein the platform comprises a platform floor and at least one platform side wall protruding from the platform floor, wherein the at least one platform side wall and the platform floor are separate parts. The first aspect may alternatively be described as a foldable ramp designed for wheelchair access to the rear door of a passenger car, wherein the foldable ramp comprises a platform that can be positioned in various configurations, including an entry position where the ramp is unfolded from the car to facilitate wheelchair access, a transport position where the platform is positioned upright within the car, and a passive position where the platform lies flat within the car, wherein the platform comprises a platform floor and at least one platform side wall that extends from the platform floor, wherein the platform side wall and the platform floor are constructed as separate components.

In the entry position, the platform may be oriented at an angle between 5° and 30°, preferably between 10° and 20°, relative to the horizontal. Due to such an orientation of the platform during access of the wheelchair, the wheelchair may easily and smoothly access the interior of the passenger car. For example, the length of the ramp in a length direction is larger than 20 cm and preferably less than 5 m, preferably between 50 cm and 2 m. The platform may further be arranged in a transport position, i.e. a position in which a wheelchair has accessed the interior of the passenger car via its rear door and in which the passenger car may be driven while the wheelchair and the platform are stored in the back of the passenger car. In the transport position, the entry platform may be oriented in an upright position, particularly in a vertical position. It is clear, that in the transport position, the platform shall preferably have a length which is less than a vertical dimension of the passenger car, in particular a vertical dimension of the back of the passenger car. In an advantageous embodiment of the invention, the platform may be provided with a profiled upper surface and/or an anti-slip coating in order to facilitate use of the foldable ramp even in bad weather conditions, such as rain and/or snow, and/or to prevent the wheelchair from sliding backwards and/or sideways when accessing the passenger car rear door. Also, the platform may be arranged in a passive position in which the entry platform is provided in the passenger car in a lying position. The term "platform" as used herein may be interchangeably used with the term "entry platform".

The foldable ramp may comprise a pivot mechanism for mounting the entry platform to the passenger car, and particularly for enabling a pivoting movement of the entry platform, preferably between the entry position, the transport position and the passive position of the entry platform, with respect to the passenger car.

In this context, the term "platform" may refer to the main surface of the ramp that supports the wheelchair. The "platform floor" may be described as the structure of the platform via which the wheelchair can access the car, while the "platform side walls" are the vertical components that extend from the platform floor, providing structural support, additional functionality and/or avoiding that a wheelchair unintentionally leaves the platform floor. The term "foldable" particularly indicates that the ramp can be folded into the car, in particular into the transport position and/or the passive position, in particular in that the tailgate of a car can be closed without removing the foldable platform from the car, in other words that the ramp can be collapsed or extended as needed for use or storage.

Preferably the platform comprises two platform side walls being separate parts with respect to each other and with respect to the platform floor. In other words, the platform preferably comprises at least three separate parts, namely two platform side walls and one platform floor. It should be clear that all features and embodiments described above and below with respect to at least one platform side wall may apply mutatis mutandis to embodiments with two platform side walls. Particularly preferred, the platform side walls are spaced from each other in a width direction.

The term "separate parts" as used herein may interchangeably be used with "distinct parts", "parts being not integrated into a single piece" and "parts being manufactured and/or, preferably and, assembled as individual parts".

The advantage of having the platform side wall and platform floor as separate parts lies in particular in the flexibility and functionality it offers. By constructing the side walls as separate components, preferably using an extrusion process for the side walls, the design can incorporate additional features such as LED lights or T-slot rails. This separation also eliminates the need for edge protections on sharp alloy sheet edges, as the edges of the platform floor can be covered by a notch in the extruded side wall. This design not only enhances the functionality of the ramp but also improves safety and ease of use.

Preferably, the platform floor comprises, in particular consists of, a sheet, in particular a metal sheet, more in particular an aluminum sheet. The term sheet, as used herein, may be interchangeably used with the term "plate" or "sheeting". A "sheet" within the meaning of the present disclosure can refer to a flat piece of material, in particular metal, more in particular aluminum. The term "flat piece" or "sheet" as used herein may refer to a structure having a small thickness compared to its width and length. For example, a sheet may refer to a structure having a thickness of less than 10 %, 8%, 6%, 5%, 4%, 3%, 2% or 1% of the smaller one of its length and width. For example, the ramp floor may have a length of 2,0 meter, a width of 1,5 meter and a thickness of 10 mm.

The term "width" of the platform floor may refer to its extension in width direction. The "width direction" may refer to the direction defining the space between two side walls of the platform or the direction defining the space between two wheels of the same axis of the passenger car. The "length" of the platform floor may refer to the extension of the platform in length direction. The "length direction" may refer to the direction a wheelchair moves when it accesses the car or to the direction defining the space between wheels of different axis of the passenger car. The "thickness" of the platform floor as used herein may refer to its extension in thickness direction of the platform. The "thickness direction" may refer to the direction extending orthogonal to a plane defined by the width direction and the length direction

Preferably, the platform floor is made from a single, continuous sheet of materials. This provides a seamless and uniform surface and eliminates the need for multiple pieces, thereby enhancing the structural integrity and stability of the platform. By using a single sheet, the platform base provides a robust and reliable support surface, in particular without joints or seams that could potentially weaken the structure or cause issues during use. Further, using a single sheet of material for the platform base makes the ramp easy to assembly, less expensive and adaptable to different cars. In particular in combination with the at least one side wall being made from extrusion profiles, the platform base can be cut into the required width and length and be connected, e.g. via notches in the side walls, thereby making the foldable ramp at the same time adaptable to different cars as well as easy to be assembled and cheep to manufacture. Particularly preferred, the platform floor extends in a, in particular straight, plane and is free from curvatures and/or bended sections leaving the plane. In a preferred embodiment the platform floor consists of a sheet of material comprising holes for connecting it, e.g. via screws or other connecting means, with the at least one side wall.

In a first implementation of the foldable ramp according to the first aspect, the at least one platform side wall is an extrusion profile, in particular an extrusion profile with I-shaped cross section in a plane extending orthogonal to the extrusion direction. Preferably the extrusion profile comprises or consists of aluminum, in particular an aluminum alloy. The word "I-shaped cross section" as used herein particularly refers to a substantially rectangular cross section and/or to a cross section having a height and a width, wherein the height is at least 200 %, preferably at least 300 %, more preferably at least 400 % or at least 500 %, of the width.

The "height" of the platform side wall as used herein particularly refers to the extension of the platform side wall in "height direction". The "width" of the platform side wall as used herein particularly refers to the extension of the platform side wall in "width direction". The "width direction" and the "height direction" of the platform side wall as used herein particular refers to directions defining a plane, in particular a plane extending orthogonal to the "extrusion direction" of the platform side wall. The extrusion direction particularly refers to the direction in which the platform side wall is extruded. In embodiments where the platform side walls are not extruded, the term "extrusion direction" as used herein can be interchangeably used with the term "length direction". In preferred embodiments, the length direction of the at least one platform side wall and the length direction of the platform floor correspond to the same direction and can be referred to as generic "length direction". The same applies to the width direction of the at least one platform side wall and the width direction of the platform base which refer in preferred embodiments to the same direction and can be referred to as generic "length direction". Further, in preferred embodiments, the height direction of the platform side walls and thickness direction of the platform floor can correspond to the same direction and can be referred to as generic "heigh direction".

The use of an extrusion profile for the platform side wall enhances the structural integrity and strength of the ramp, providing a robust and durable side wall that can withstand the stress and load associated with wheelchair access. The I-shaped cross section of the extrusion profile further contributes to the mechanical strength and rigidity of the side wall, ensuring that it can support the weight and movement of a wheelchair without deforming or bending. Additionally, the extrusion process allows for precise and consistent manufacturing of the side wall, ensuring uniformity and quality in the production of the ramp. This also facilitates easier assembly and integration of the side wall with the platform floor, as the extrusion profile can be designed to fit seamlessly with the other components of the ramp. Overall, the incorporation of an extrusion profile with an I-shaped cross section for the platform side wall enhances the functionality, reliability, and manufacturability of the foldable ramp, providing a more effective and user-friendly solution for wheelchair access to passenger cars. Furthermore, the use of an extrusion profile allows the implementation of slots and notches, in particular as described in detail below, thereby increasing the potential for implementation of functions, such as LED stripes and guiding mechanisms, and making the platform easy to assemble, e.g. by using the slots for connecting the platform floor via screws and nuts with the platform side walls.

In a further implementation of the foldable ramp according to the first aspect, the at least one platform side wall comprises at least one notch for covering an edge, in particular sharp edge, of the platform floor. This enhances safety by mitigating the risk of injury or damage that could be caused by the sharp edge of the platform floor, respectively obviating the use of separate protecting covers for the sharp edge. The notch effectively acts as a protective covering, ensuring that the sharp edge is not exposed. This does not only improve the overall safety of the ramp but also contributes to the durability and user-friendliness of the ramp by preventing potential wear and tear on the platform floor's edge and makes assembly of the ramp easier and the ramp less expensive. In particular, the notch is designed to fit over the edge of the floor. This interaction between the notch and the edge ensures that the side wall remains securely in place while providing the necessary protection. In a preferred embodiment, the notch extends along at least 50%, 60%, 70%, 80%, 90%, 95 % of the length or along the complete length of the at least one platform side wall. The "length" of the platform side wall may refer to the extension of the platform in "length direction". The "length direction" may refer to the direction a wheelchair moves when it accesses the car or to the direction defining the space between wheels of different axis of the passenger car or, when the platform side wall is an extrusion profile, to the extrusion direction. Additionally or alternatively, the notch may have a u-shaped cross section with a base and two legs. Preferably the legs are spaced from each other by between 100 % and 150%; preferably between 105 % and 150%, more preferably by between 110 % and 130% of the thickness of the platform floor. Such dimensioning makes the platform base easy to be placed into notch while still providing a certain degree of guidance for the plate. Preferably, the u-shaped cross section extends in length direction and width direction, wherein the legs are spaced form each other in height direction of the side wall (which can also be referred to as the thickness direction of the platform floor). Particularly preferred, the notch extends, in particular in height direction, below a slot for connecting the platform floor with the platform side wall, which slot will be described in detail below.

In a further implementation of the foldable according to the first aspect, the at least one platform side wall comprises at least one slot for connecting the platform floor with the platform sidewall, The at least one slot within the platform facilitates the connection between the platform floor and the platform side wall. Preferably, the slot carries at least one nut, wherein the platform side wall is connected with the platform floor by connecting means, in particular by screws, extending through the platform floor and engaging, in particular being screwed into, said at least one nut. This arrangement allows for a secure and stable connection between the platform floor and the platform side wall, enhancing the structural integrity of the ramp. The inclusion of the slot and nut provides a reliable and adjustable means of assembly, ensuring that the platform can be easily and securely attached to the side walls. This brings the advantage of facilitating the assembly and disassembly of the ramp, allowing for easier maintenance and potential replacement of individual components if necessary. Additionally, the use of screws as connecting means offers the flexibility of tightening or loosening the connection as required, further contributing to the durability and adaptability of the ramp. This design also ensures that the ramp can withstand stress and loads associated with wheelchair access, providing a safe and dependable solution for users. Preferably the slot extends along at least 50%, 60%, 70%, 80%, 90%, 95% or 100% of the length of the platform side wall and/or of the platform floor. Additionally or Alternatively, the slot is preferably implemented in the side of the at least one side wall facing the platform floor, which can be referred to as the bottom side of the platform side wall. Particularly preferred the slot comprises a cavity extending in longitudinal direction of the at least one platform side wall. The cavity is preferably configured, to carry the at least one nut, in particular in that the at least one nut is longitudinally movable in length direction along the cavity. Further, the slot preferably comprises a longitudinal slit allowing connecting means, in particular screws, to extend from the platform base through the slit into the cavity of the slot.

In a further implementation of the foldable ramp according to the first aspect, the at least one platform side wall comprises at least one slot for connecting the platform side wall with a rail in particular with a rail of a slide-rail arrangement of a pivot mechanism of the foldable ramp, in particular wherein the rail is connected to the top of the at least one platform side wall. The inclusion of the slot in the platform side wall facilitates the connection with the rail, ensuring a secure and stable attachment. Furthermore, the rail is connected to the top of the platform side wall, which can be referred to the side facing away from the platform floor, in particular in height direction, which enhances the structural integrity and operational functionality of the ramp. This configuration allows for a smooth and controlled movement of the ramp between its various positions, including the entry position, transport position, and passive position. The incorporation of a slot in the platform side wall for rail connection brings significant improvements in terms of ease of assembly and disassembly, as well as providing a reliable and robust connection that can withstand the stresses and strains encountered during the ramp's operation and with respect to space savings in height direction and width direction. The space savings in width direction can in particular be realized by placing the rail on the top of the at least one platform side wall instead of placing it next to it in width direction. The inventors found that, thanks to the use of an extrusion profile for the platform side wall, the platform side wall's height can be significantly reduced without losing structural integrity, thereby compensating the additional height of the rail on the side wall's top so that - while the extension in width direction is reduced - the height can be maintained or even be reduced. Preferably the slot extends along at least 50%, 60%, 70%, 80%, 90%, 95% or 100% of the length of the platform side wall. Particularly preferred the slot comprises a cavity extending in longitudinal direction of the at least one platform side wall. The cavity is preferably configured, to carry at least one nut for connecting the rail, in particular via connecting means, such as screws, to the platform side wall, in particular in that the at least one nut is longitudinally movable in length direction along the cavity. Further, the slot preferably comprises a longitudinal slit allowing connecting means, in particular screws, to extend from the rail arrangement through the slit into the cavity of the slot.

The foldable ramp may further comprise at least one pivot mechanism. A pivot mechanism as used herein may be employed to transition the platform between the transport position and passive position. This mechanism may pivot around an axis that runs parallel to the width of the platform. The pivot mechanism may be equipped with guiding means that define the path of the pivot axis during the transition, ensuring that the platform undergoes a combined rotational and translational movement. The guiding means may comprise pin-groove arrangement as described in detail below and/or a slide-rail arrangement as described in detail below.

The pivot mechanism preferably comprises guiding means for defining a trajectory of the pivot axis between the transport position and the passive position so that the platform, when moving between the transport position and the passive position, conducts a rotationally translational movement, wherein the guiding means comprises at least one slide-rail arrangement, in particular with defined clearance between the slide and the rail in width direction. The slide-rail arrangement, in particular it's defined clearance, may be realized by using a slide-rail arrangement with a rail having a cavity with t-shaped cross section, which may also be referred to as "T-slot profile" and a slide with t-shaped cross section, wherein the t-shaped cross section of the slide and of the cavity of the rail are correspond to each other, e.g. have substantially the same dimensions despite a defined clearance , e.g. for allowing smooth movement of the slide in the rail. For example, the defined clearance may be between 0 mm and 10 mm, preferably between 0,1 mm and 8 mm, more preferably between 0,2 mm and 5 mm, even more preferably between 0,5 mm and 3 mm, most preferably between 1 mm and 2 mm. The clearance may be realized in that the dimension of the slide corresponding to the dimension of the cavity in the rail, for example the "top" or "crossbar" of the "T" and/or the "leg" or the "longitudinal bar" of the "T", is smaller by a defined clearance, e.g. the previously defined ranges. The advantages of this design include a compact and efficient mechanism for moving the ramp between different positions, reducing space requirements and complexity. The use of a T-slot profile for the slide-rail arrangement further enhances the compactness and ease of manipulation of the ramp. This design also allows for better force distribution in the joints, making it easier to balance the ramp during use.

The slide of the slide-rail arrangement is preferably connected, in particular rotatably connected, to a bridge, in particular a bridge side wall, more in particular to a rail being connected to the bridge side wall, preferably as described above. A "bridge" as used herein particularly serves to, e.g. is designed to, connect the platform to a passenger car, in particular to rotatably connect the platform to the passenger car, in particular in that the platform can rotate from the transport position into the entry position and vice-verse, in particular by means of a pure rotational movement. Preferably, the previously and subsequently described pivot mechanism is designed to define the translational rotational movement of the platform from the passive position into the transport position and vice versa, while the bridge is designed to define the rotational movement of from the transport position to the entry position and vice versa. Preferably, the pivot mechanism defines the translational rotational movement from the passive position into the transport position and vice versa as a relative movement between the bridge and the platform, particularly preferred as a movement of the platform while the bridge does not move.

For this purpose, the pivot mechanism may comprises a slide-rail arrangement, e.g. the previously and subsequently described slide-rail arrangement, the rail of which is fixedly connected to the platform while the slide can move longitudinally relative to the platform along the rail while being connected to the bridge, in particular to a side plate of the bridge, e.g. rotationally connected to the side plate of the bridge but not translationally movable with respect of the side plate of the bridge. This can be realized for instance by means of a pin protruding from the slide and being connected to the side plate of the bridge by means of a bearing, in particular a roller bearing.

In addition to the slide-rail arrangement, the pivot mechanism can comprise a pin-groove arrangement which will be described in detail below. The pin groove arrangement can be realized in that the groove is fixedly connected to the bridge, e.g. to a side plate of the bridge, preferably to the same side plate of the bridge carrying the pin of the slide of the slide rail arrangement. The pin of the pin-groove arrangement can be connected, in particular fixedly connected, to the platform, in particular to a platform side wall, in particular to the same platform side wall carrying the rail of the slide-rail arrangement. Thereby, the pin of the pin groove arrangement may be not in rotational and/or translational direction relative to the platform but translationally and preferably rotationally movable relative to the bridge, in particular along the groove of the bridge side plate.

In a further implementation of the foldable ramp according to the first aspect, the side wall comprises at least two slots, preferably on opposite sides of the platform side wall, in particular wherein the at least one platform side wall extends along a longitudinal direction parallel to the platform floor and along a height direction orthogonal to the platform floor, wherein the two slots are located on opposite sides of the platform side wall in height direction. The slots on opposite sides of the platform side wall provide means for secure attachment of the side wall with the platform floor, in particular as described above, at the side facing the platform floor and means for secure attachment of a rail of a slide-rail arrangement of a pivot mechanism, in particular as described above, at the side facing away from the platform floor. Additionally, the placement of the slots in the height direction allows for a more robust connection, distributing the load more evenly and reducing the risk of structural failure. This design also facilitates easier manufacturing and maintenance, as the separate parts can be individually replaced or repaired without the need for complete disassembly of the ramp.

The rail may further comprise at least one installation hole, in particular for attaching the ramp to a pin of a pivot mechanism, in particular to a pin being movably guided in groove, in particular in a groove of a bridge side plate, e.g. as described above.

In a further implementation of the foldable ramp according to the first aspect, the at least one platform side wall comprises at least one, preferably at least two, slots for carrying a light source, in particular an LED strip, in particular wherein one slot is located on the top of the at least one side wall and/or one slot is located on a side, in particular the side facing away from a person on the platform, of the at least one platform side wall. Preferably the at least one slot, preferably the at least two slots, on the top of the platform side wall extends along at least 50%, 60%, 70%, 80%, 90%, 95% or 100% of the length of the platform side wall. Particularly preferred the slot comprises a cavity extending in longitudinal direction of the at least one platform side wall. The cavity is preferably designed to carry a light source, in particular an LED-strip. Further, the slot preferably comprises a longitudinal slit allowing light from the light source to illuminate the environment of the platform base, in particular to the left and to the right of the platform, in particular in width direction. In particular, one slot is strategically located on the top of the side wall, while another slot is positioned on the side of the side wall, specifically on the side facing away from a person on the platform. This arrangement enhances the functionality of the ramp by providing illumination, which is particularly beneficial in low-light conditions, thereby improving visibility and safety for wheelchair users. The inclusion of these slots for light sources not only adds a practical feature but also contributes to the overall user experience by ensuring that the ramp is easily visible and accessible under various lighting conditions. The implementation of LED strips within these slots offers an efficient and durable lighting solution, further enhancing the ramp's usability and reliability. The positioning of the slots on both the top and the side of the side wall ensures that the light is distributed effectively, covering a wider area and providing better illumination. In particular, the position of the slots on the top of the side wall allows implementing the light source in the top of the side wall which allows a person in a wheel chair to easily identify the boundary of the passage for accessing the car while the slots on the side facing away from the person on the wheel chair allows the environment to realize that the platform is in unfouled condition thereby reducing the risk of collisions with the platform.

A second aspect of the invention, which can be combined with the first aspect and vice versa, relates to a foldable ramp for wheelchair access to a passenger car rear door, comprising a platform which can be arranged in several positions including an entry position wherein the platform is folded out of the car to allow wheelchair access to the car, a transport position wherein the platform is arranged in the car in an upright position and a passive position wherein the platform is arranged in the car in a lying position, wherein the platform comprises a platform floor and at least one platform side wall protruding from the platform floor; and at least one light or sound source, wherein the at least one light or sound source is located at the at least one platform side wall. The second aspect of the invention may alternatively be described as relating to a foldable ramp designed for wheelchair access to the rear door of a passenger car, wherein the ramp comprises a platform that can be arranged in an entry position where the platform is folded out of the car to allow wheelchair access, a transport position where the platform is upright within the car, and a passive position where the platform lies flat within the car, wherein the platform includes a floor and at least one side wall protruding from the floor, wherein the ramp features at least one light or sound source, which is specifically located on or inside the platform's side wall.

The wording "located at the at least one platform side wall" is intended to cover light or sound sources located on the side wall, e.g. protruding from the platform side wall, as well as light or sound sources located at least partially inside the side wall, e.g. completely inside the platform side wall. Preferably, at least 50%; 60%, 70%, 80%, 90%, 95% or 100 % of the light or sound source, such as a light strip, in particular an LED strip, are located completely inside the side wall. This can for instance be realized by incorporating slots into the side wall for carrying the light or sound source therein. Preferably, the at least one platform side wall is designed as described above, in particular comprising slots with a cavity for receiving the light or sound source and a slit for allowing the light to illuminate the environment of the platform and/or being realized as extrusion profile. It shall be clear that the details described above with respect to the first aspect of the invention relating to the platform side wall can be realized with respect to the second aspect of the invention with or without realizing the platform floor and the platform side wall as separate parts. However, it is preferred to combine the first and second aspect of the invention, in that the platform floor and the platform side wall are separate parts, wherein the platform side wall is an extrusion profile including at least one light or sound source being located in a slit of the extrusion profile. Preferably, the light or sound source is a light source, more preferably a light strip, most preferably a LED strip. It is conceivable that the light or sound source is designed to emit different signal depending on predetermined parameters. For example, the light or sound source can be designed to emit different signals depending on the load of the ramp and/or of the position of the ramp. For example. A light source can be designed to change the color of the light from green to red, when a maximum load is reached. In particular, the light source can - in unloaded state - emit green light which changes continuously from green over yellow to orange and red depending on the weight. In alternative embodiment, a light or sound source can be designed to only emit a signal, for example light or a sound, when the maximum load is reached. The signals can be for example a red light signal or a warning sound signal. Additionally or alternatively, the light or sound source may be designed to emit a signal, for example a blinking light or a frequented sound signal, when the ramp moves from the passive position or the transport position into the entry position, in particular to warn individuals approaching the ramp to avoid collisions.

The advantage of having the light or sound source located at the platform side wall is that it enhances visibility and communication regarding the ramp's status. For instance, LED lights on the side wall can signal to surrounding individuals that the ramp is deployed, which is particularly important in low-light conditions, thereby improving safety. Additionally, the lights can communicate various conditions of the ramp, such as readiness for wheelchair use, lack of security, or overload, through different colors or blinking patterns. This level of functionality and safety cannot be achieved as effectively if the lights were located on the platform floor. For instance, when the platform is moved from the transport or passive position into the entry position, a light source on the platform floor would illuminate the sky while the side wall would block light beams from illuminating the environment of the car. Further to that a light source on the platform floor would at some point be covered by the wheelchair on the platform so that the person on the wheelchair would not realize overload of the ramp.

In an implementation of the foldable ramp according to the second aspect, the at least one light source is located on the top of the at least one platform side wall. The placement of the light source on the top of the side wall brings several advantages and functional improvements. It ensures that the light source is more visible and effective in illuminating the ramp area, thereby enhancing safety and accessibility for wheelchair users, especially in low-light conditions. The elevated position of the light source on the top of the side wall allows for better distribution of light across the platform, reducing shadows and providing a clearer path for the user. Additionally, this placement can help in signaling the presence of the ramp to other individuals or vehicles, thereby preventing accidents or collisions. Preferably, the at least one light source is integrated into a slot, in particular as described above, of the platform side wall. Particularly preferred, the light source, in particular a light strip, extends in longitudinal direction along at least 50%; 60%, 70% or 80% of the platform side wall. In a preferred embodiment the top of the side wall carries the light source and/or a rail of a slide-rail arrangement of a pivot mechanism of the foldable ramp. Preferably, the platform side wall comprises a light source carrying part extending from the end of the platform side wall facing (when the platform is in entry position) the street to a slide-rail arrangement carrying part extending from the light source carrying part to the end of the platform facing (when the platform is in entry position) the car. Preferably, the light source is located at, preferably in, the top of the light source carrying part of the platform side wall and/or the slide-rail arrangement is located at the top of the slide-rail arrangement carrying part of the platform side wall. Preferably both, the light source and the rail of a slide-rail arrangement are connected to the platform side wall via a slot in the top of the platform side wall, in particular a slot as described above, particularly a slot comprising a cavity and a slit allowing access from the cavity to the outside of the platform side wall and vice versa.

In a further implementation of the foldable ramp according to the second aspect, the at least one light source is located on a side, in particular the side facing away from a person on the platform, of the at least one platform side wall. Preferably, the platform comprises two platform side walls being located on opposite sides of the platform floor in width direction, wherein the two platform side walls each comprise an inside (or inner side) and an outside (or outer side). In particular, the insides of the two platform side walls face each other, e.g. face a person on the platform, wherein the outsides of the two platform side walls face away from each other, e.g. face away from a person on the platform. Preferably, the at least one light source is located on the outside of the platform side wall. For this purpose, the platform side wall preferably comprises a slot, in particular as described above, integrated into the outside of the platform side wall, in particular integrated into the outside of an extrusion profile realizing the platform side wall. Preferably the slot carrying the light source, in particular the light strip, in particular LED strip, is located in height direction in between the slot on the top of the platform side wall and the slot on the bottom of the platform side wall, in particular in between the two slots on opposing sides of the platform side wall as described above. This allows using the slot at the top for a light source and/or a rail of a slide-rail arrangement, in particular as described above and the slot at the bottom of the platform side wall for connecting the platform bottom with the platform side walls, while the space in between is free for a slot carrying the light source at the outside of the platform side wall. Preferably, the light source is completely integrated into the platform side wall, in particular in the slot in the side of the platform side wall facing away from a person on the platform, more in particular in a cavity of the slot wherein a slit of the slot allows light to illuminate the environment of the platform.

The light source on the side of the platform side wall that faces away from a person on the platform ensures that the light is directed outward, enhancing visibility for users approaching the ramp. This orientation ensures that the light source is not obstructed by the platform floor and platform side wall, thereby providing clear illumination of the surrounding area, which is particularly beneficial in low-light conditions. The outward-facing light source can serve as a visual guide for wheelchair users, helping them to align their approach to the ramp more accurately and safely. Additionally, this placement can improve the overall safety of the ramp by making it more visible to other individuals or vehicles in the vicinity, reducing the risk of accidents.

In a further implementation of the foldable ramp according to the second aspect, the foldable ramp comprises at least two light sources at each platform side wall, in particular a first one of the at least two light sources is located on the top of the at least one platform side wall, a second one of the at least two light sources is located on a the side of the at least one platform side wall facing away from a person on the platform (which can alternatively be referred to as the previously described outside of the platform side wall or - when the platform comprises two side walls - as the side facing away from the other side wall). This arrangement of light sources enhances visibility and safety by ensuring that the platform is well-illuminated from multiple angles, thereby aiding users in low-light conditions and providing clear indicators of the platform's edges. The communication between the components, specifically the platform floor, platform side walls, and the light sources, is facilitated by the strategic placement of the light sources to maximize illumination and visibility. The new feature of having multiple light sources on each side wall, with specific positioning on the top and the side facing away from the platform floor, brings an added layer of functionality and safety to the foldable ramp. It ensures that the platform is not only visible from above but also from the sides, which is particularly beneficial when the ramp is being used in various lighting conditions or environments.

In a further implementation of the foldable ramp according to the second aspect, the at least one light or sound source emits a light or sound signal in at least one of the following scenarios:
a) the platform moves from the transport position to the entry position or vice versa,
b) the platform is ready to accept a wheelchair,
c) a load measurment arrangement of the foldable ramp detects platform load or overload, or
d) the platform is not secured.

Scenario a) may particularly include, when the platform transitions between the transport position and the entry position, indicating / alerting users or the environment of the moving platform. Scenario b) may comprise, when the platform is ready to accept a wheelchair, providing a clear signal to the user that the ramp is prepared for use, thereby facilitating safe and efficient wheelchair boarding. In scenario c), the light or sound source may be designed to emit signals when a load measurement arrangement detects either a load or an overload on the platform. This may be beneficial for ensuring the ramp's structural integrity and preventing potential damage or accidents due to excessive weight. In scenario d), the light or sound source signals when the platform is not secured, serving as a warning to users or operators that the platform may not be in a safe or stable condition for use or transport. These communication mechanisms between the light or sound source and the platform's operational status enhance the overall user experience by providing real-time feedback and alerts, thereby improving safety, usability, and reliability. The integration of these features ensures that users are well-informed of the ramp's status and can take appropriate actions based on the signals received, ultimately contributing to a more secure and user-friendly wheelchair access solution.

In a further implementation of the foldable ramp according to the second aspect, the at least one light source is a LED light source and/or has the shape of a strip, in particular is a LED strip. The introduction of LED light sources brings several advantages. LED lights are energy efficient, consume less power compared to traditional incandescent or fluorescent lights, which is particularly beneficial in a vehicle setting where power conservation is crucial. Furthermore, LEDs have a longer lifespan, reducing the need for frequent replacements and thereby enhancing the durability and reliability of the ramp system. The use of LED lights also provides better illumination, which can improve visibility for wheelchair users during entry and exit, especially in low-light conditions. Further to that, LED lights can be integrated into stripes which are easy to implement into slots of extrusion profiles thereby making it easier to assemble the foldable ramp. Preferably, LED light is an LED strip, in particular at least one LED strip, preferably at least two LED strips, inserted into at least one slot, preferably at least two slots, of an extrusion profile realizing the at least one platform side wall.

A third aspect, which can be combined with the first and/or second aspect and vice versa, of the invention provides a foldable ramp for wheelchair access to a passenger car rear door, comprising a platform which can be arranged in several positions including an entry position wherein the platform is folded out of the car to allow wheelchair access to the car, a transport position wherein the platform is arranged in the car in an upright position and a passive position wherein the platform is arranged in the car in a lying position, wherein the platform preferably comprises a platform floor and preferably at least one platform side wall protruding from the platform floor, at least one light or sound source, and at least one pair of connectors with a connected state for connecting the light or sound source with an electric circuit and a disconnected state for disconnecting the light or sound source and the electric circuit, wherein the pair of connectors is designed in that they are in connected state in at least one position of the platform between the entry position and transport position and in disconnected state in at least one position between the transport position and the passive position. The advantage of this configuration lies in its ability to automatically manage the operation of the light or sound source based on the position of the ramp. This ensures that the light or sound source is activated only when necessary, such as when the platform is being used, e.g. in entry position, or folded out of the car, e.g. between transport position and entry position, and is deactivated when the ramp is not in use, thereby conserving energy and enhancing safety.

In an implementation of the foldable ramp according to the third aspect, the at least one pair of connectors, comprises a first connector being fixedly connected to a bridge of the foldable ramp and a second connector being fixedly connected to the platform, in particular to a side wall of the platform. This arrangement ensures a reliable and secure connection between the light or sound source and the electric circuit when the platform is in certain positions, enhancing the functionality and safety of the ramp by providing illumination or auditory signals during use. The fixed connection of the first connector to the bridge and the second connector to the platform side wall allows for a stable and consistent electrical connection, reducing the risk of disconnection or malfunction during the transition between different platform positions. This feature brings an added layer of convenience and reliability, ensuring that the light or sound source remains operational when needed, particularly during the critical phases of entry and transport, while automatically disconnecting in the passive position to conserve energy and prevent unnecessary wear on the electrical components. Further to that, thanks to the connection of the connectors to the bridge and the platform side wall, this embodiment can make use of a relative movement between the side wall and the bridge when the ramp moves from the passive position into the upright position or vice versa for switching between the connected and disconnected state. This allows to emit light and/or sound only in desired ramp positions without the need of sensors or a complex control unit to determine the presence of the ramp in the respective positions.

The at least one side wall is preferably designed as described above, in particular being made of an extrusion profile and carrying at least one light or sound source. Preferably, the second connector is electrically connected with the light source, in particular via a cable. Preferably, a cable extends from the second connector at least partially through the platform side wall, in particular into a slot of the platform side wall carrying a light or sound source, in particular a light strip, such as an LED strip.

In a further implementation of the foldable ramp according to the third aspect, the connectors are in contact with each other to establish the connected state in any position of the platform between the transport position and the entry position, and wherein the connectors are spaced from each other in the passive position of the platform and preferably in any position between the passive position and the transport position. This enables that the light or sound source remains connected to the electric circuit during the transition of the platform from the transport position to the entry position, thereby ensuring continuous operation of the light or sound source during this phase. The connected state facilitates the reliable activation of the light or sound source, which is beneficial for safety and user guidance as the ramp is being deployed for wheelchair access. Furthermore, the implementation specifies that the connectors are spaced from each other in the passive position of the platform. This spacing effectively establishes a disconnected state, ensuring that the light or sound source is not unnecessarily powered when the platform is in the passive position within the vehicle. This feature contributes to energy efficiency by preventing the consumption of power when the ramp is not in active use, thereby preserving the vehicle's battery life. The design of the connectors to be in contact in any position between the transport and entry positions, yet spaced in the passive position, introduces a precise and reliable method of controlling the electrical connection based on the platform's position. This mechanism enhances the overall functionality of the foldable ramp by providing an automatic and position-dependent electrical connection system, which simplifies the operation for the user and reduces the potential for human error.

In a further implementation of the foldable ramp according to the third aspect, which may be combined with the previous implementations, the at least one pair of connectors comprise magnetic means and/or biasing means for urging the connectors against each other in the connected state. Thereby, an, in particular electric, connection between the light and/or sound source in the connected state can be made more stable thereby increasing the reliability of the system. The magnetic means may comprise two magnetic parts attracting each other in the connecting state. For example, the at least one, preferably both, connector/s of the pair of connectors may comprise or consist of a magnetic connector. One magnetic connector may comprise at least one, preferably multiple, for example four, contact pin/s. Additionally or alternatively, one, preferably the other one, of the connectors may comprise at least one, preferably multiple, for example four, female contact opening/s, in particular for receiving the at least one, preferably multiple, for example four, contact pin/s of the other magnetic connector. The biasing means may comprise at least one spring, in particular a board edge spring. The at least one spring may be designed to urge the two connectors towards each other in the connected state.

### Brief description of drawings

The invention will be explained in detail by means of the following exemplary drawings showing in
- Fig. 1: a perspective view on a section of a floor of a passenger car and a foldable ramp according to the invention being connected to the passenger car, wherein the foldable ramp comprises a platform in transport position,
- Fig. 2: a perspective view on the platform of the foldable ramp shown in Fig. 1,
- Fig. 3: a perspective view on section A of the foldable ramp shown in Fig. 1,
- Fig. 4: a perspective view on a section of a foldable ramp not according to the first aspect of the invention,
- Fig. 5: a perspective view on section B of the platform shown in Fig. 1,
- Fig. 6: a perspective view on a section of a platform not according to the first aspect of the invention,
- Fig. 7: a perspective view on section C of the platform side wall of the platform shown in Fig. 2,
- Fig. 8: a cross section view on section D of the platform side wall shown in Fig. 7, wherein the LED strips, the rail and the connector are faded out,
- Fig. 9: a perspective view on section D of the bridge of the foldable ramp shown in Fig. 3, wherein the platform 3 is faded out to show the inside of the bridge,
- Fig. 10: a side view on section D of the foldable ramp shown in Fig. 3, wherein the platform is in transport position,
- Fig. 11: a side view on section D of the foldable ramp shown in Fig. 3, wherein the platform is in an intermediate position between transport position and passive position,
- Fig. 12: a side view on section D of the foldable ramp shown in Fig. 3, wherein the platform is in passive position,
- Fig. 13: a perspective view on section C of a second connector 45 on the platform side wall of the platform shown in Fig. 2 with a different perspective compared to Fig. 7,
- Fig. 14: a perspective view on the second connector 45 shown in Fig. 13 and a first connector 43, wherein the connectors 43 and 45 are in disconnected state,
- Fig. 15: a side view on the connectors 43 and 45 in disconnected state,
- Fig. 16: a side view on the connectors 43 and 45 in connected state, and
- Fig. 17: a perspective view on an alternative connector 45.

### Preferred embodiments of the invention

The following detailed description refers to the accompanying drawings. The same reference numbers may be used in different drawings to identify the same or similar elements. In the following description, for purposes of explanation and not limitation, specific details are set forth such as particular structures, functionality, etc. in order to provide a thorough understanding of the various aspects of the claimed invention. However, it will be apparent to those skilled in the art having the benefit of the present disclosure that the various aspects of the invention claimed may be practiced in other examples that depart from these specific details.

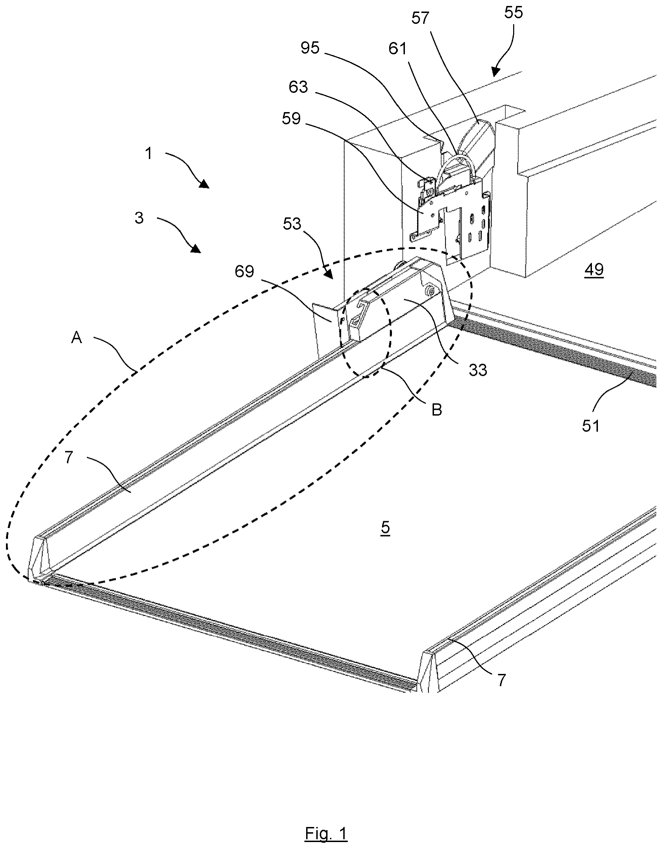

Fig. 1 shows a section of a floor 49 of a passenger car and a foldable ramp 1 for wheelchair access to the passenger car rear door according to the invention. The foldable ramp 1 is connected to the passenger car via a bridge 51, which in Fig. 1 has a corrugated surface to reduce the risk of slippage for a passenger or a wheelchair entering the passenger car from the platform 3 or the platform 3 from the passenger car. The foldable ramp comprises a platform 3 which can be arranged in several positions including an entry position wherein the platform 3 is folded out of the car to allow wheelchair access to the car, a transport position wherein the platform 3 is arranged in the car in an upright position and a passive position wherein the platform 3 is arranged in the car in a lying position. In Fig. 1 the platform 3 is arranged in entry position. The platform comprises a platform floor 5 and two platform side walls 7 protruding from the platform floor 5. The bridge 51 rotatably connects the platform 3 to the passenger car in that the platform 3 can rotate from the transport position into the entry position and vice-verse. The foldable ramp 1 further comprises a pivot mechanism 53 for transferring the platform between the transport position and the passive position and vice versa by a rotational translational movement. The pivot mechanism 53 is realised at least in part by a rail 33 of a slide-rail arrangement and a bridge side plate 69. The foldable ramp 1 further comprises two locking mechanism 55, one of which is shown in Fig. 1 with a locked state, in which a movement of the platform 3 from the transport position into the passive position is blocked, and a release state, in which the platform 3 can move from the transport position into the passive position. The locking mechanism 55 comprises an electric actuator 57 and is covered by a plate 59. The electric actuator 57, when actuated, pulls a wire 61 which is connected to a locking means 63 for switching between the passive state and the release state. The locking mechanism 53 further comprises an emergency lever 95 for pulling the wire 61 independently from the electric actuator 57.

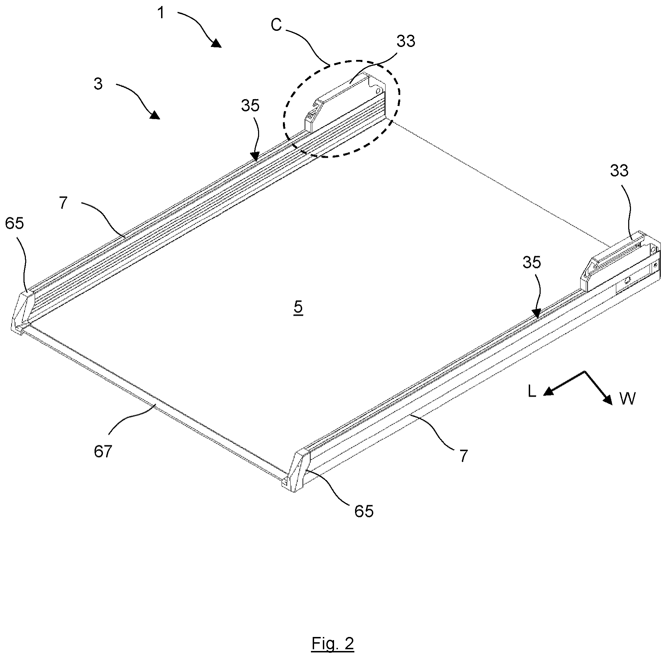

Fig. 2 shows a perspective view on the platform 3 of the foldable ramp shown in Fig. 1. As can be seen, the platform 3 comprises two platform side walls 7 on each side of the platform 3 in width direction W. In Longitudinal direction L on the side facing the passenger car, in particular the bridge 51, a rail 33 of a slide-rail arrangement of the two pivot mechanisms 53 is mounted on the top 35 of the platform side walls 7. In longitudinal direction L on the side facing away from the passenger car, in particular the bridge 53, a cover 65 is provided on each platform side wall 7. The covers 65 can be made of plastic. Further, in longitudinal direction L on the side facing away from the passenger car, in particular the bridge 54, the platform 3 comprises a corrugated surface 67, in particular to reduce the risk of slippage for a passenger or a wheelchair entering the platform. The corrugated surface 67 may be part be realized by a separate part being connected to the platform side walls 7 and/or the platform floor 5. Preferably, the part comprising the corrugated surface 67 may be connected to the platform floor 5 and to the covers 65 of the platform side walls 7.

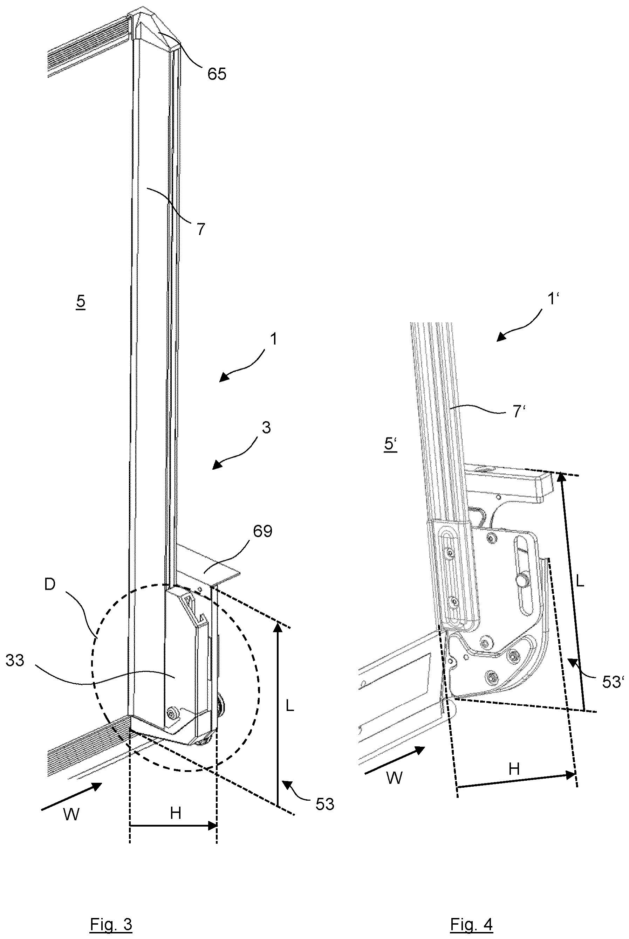

Fig. 3 shows a perspective view on section A of the foldable ramp 1 shown in Fig. 1 while Fig. 4 shows a perspective view on a section of a foldable ramp 1' not according to the first aspect of the invention as it's platform side wall 7' and its platform floor 5' are made from one single part, in particular by bending a metal sheet. As can be seen, the pivot mechanism 53' of the foldable ramp 1' according to Fig. 4 has, compared to the pivot mechanism 53 of the foldable ramp 1 according to Fig. 3, a substantially larger extension of in height direction H. The reduction of extension and thus space saving could be achieved by the inventive idea of making the bridge side wall 7 and bridge bottom 5 from separate parts, in particular by using an extrusion profile for the bridge side wall 7 which allows to integrate multiple functions into the side wall thereby obviating the necessity of multiple parts used in the foldable ramp 1' of Fig. 4, in particular it's pivot mechanism 53', and reducing the space requirements for the remaining parts. For example, in Fig. 3, the extension of the bridge side plate 69 in height direction H is about 206 mm whereas in Fig. 4, the extension in height direction H is about 230 mm.

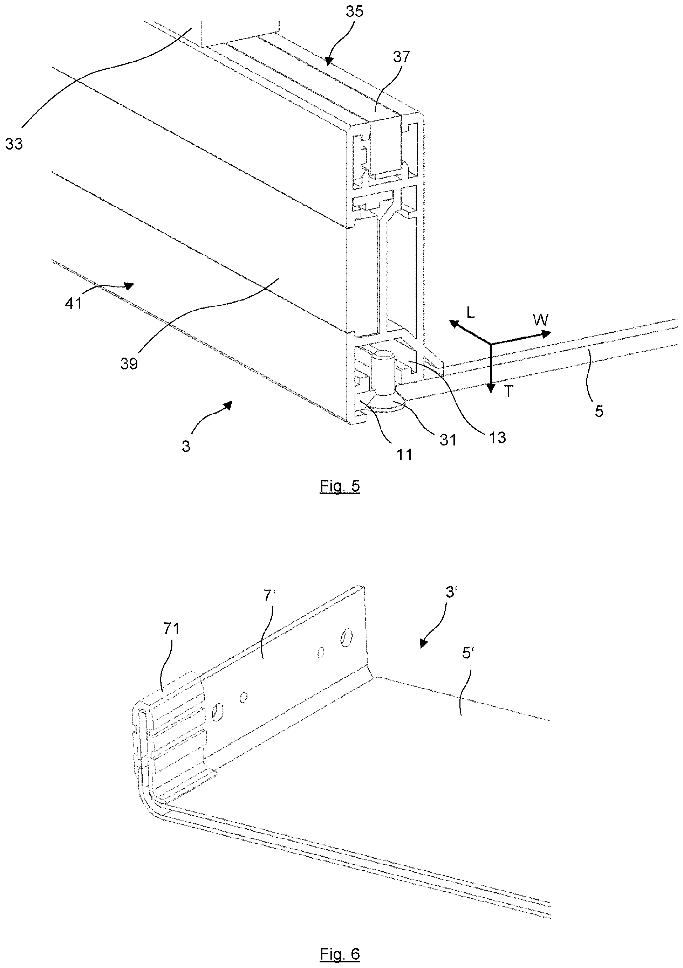

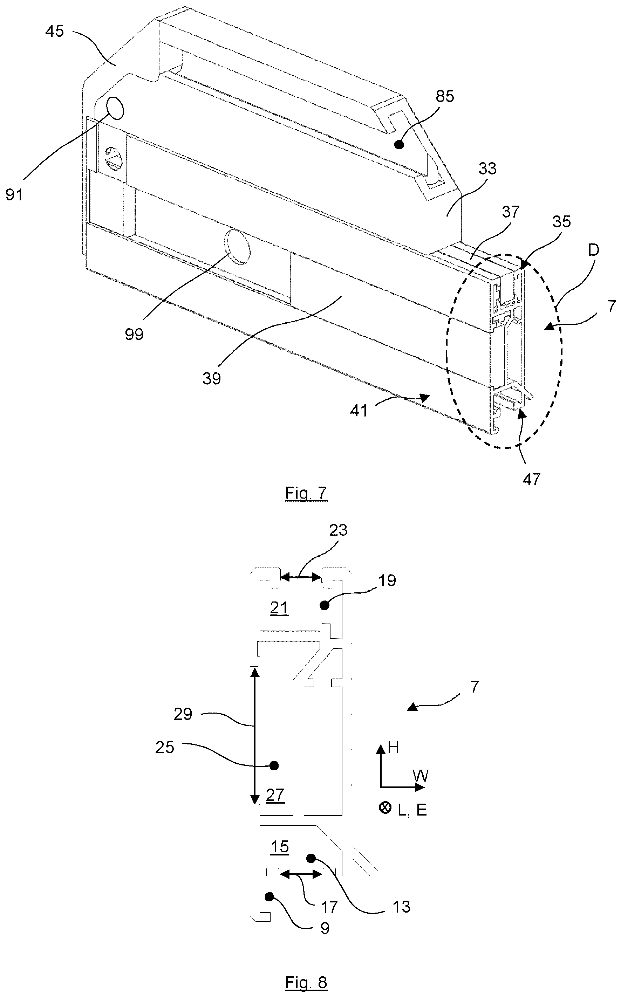

Fig. 5 shows a perspective view on section B of the platform 3 shown in Fig. 1. As can be seen, the platform floor 5 and the platform side wall 7 are made from separate parts thereby realizing the first aspect of the invention, wherein the platform side wall 7 in the present embodiment is an extrusion profile. Contrary thereto, in Fig. 6, showing a perspective view on a section of a platform not according to the first aspect of the invention, the platform floor 5' and the platform side wall 7' are made from a single metal sheet by bending. As metal sheets have sharp edges, the platform 3' shown in Fig. 6 makes use of a plastic profile 71 for edge protection, e.g. for avoiding cut injuries. Contrary thereto, thanks to the use of an extrusion profile, the sharp edge 11 of the platform side wall 5 in Fig. 5 is covered by a notch 9 (see Fig. 8) being integrally formed in the extrusion profile, in particular at the bottom 47 of platform side wall 7, so that the use of a separate plastic profile 71 can be avoided. The platform side wall 7 further comprises a slot 13 for receiving a nut (not shown) via which the platform floor 5 is connected to the platform side wall by means of a screw 31.

As can be further seen in Fig. 5, the foldable ramp comprises two light sources 37 and 39, in the form of LED strips, being located at the platform side wall 7 thereby realizing the second aspect of the invention. For this purpose, the platform side wall comprises one slot 19 at the top 35 of the platform side wall housing the light source 37 and a slot 25 at the side / outside of the platform side wall 7 housing the light source 39.

As indicated at the top of Fig.5, the slot 19 is further used for connecting the rail 33 of the carrier-rail arrangement of the pivot mechanism 53, which can be seen in detail in Fig. 7. Fig. 7 shows a perspective view on section C of the platform side wall of the platform shown in Fig. 2. At the side facing the bridge 51, a connector 45 of the pair of connectors according to the third aspect of the invention is provided.

Fig. 8 shows a cross section view on section D of the platform side wall 7 shown in Fig. 7, wherein the LED strips 37, 39, the rail 33 and the connector 45 are faded out. As can be seen therein, each of the previously described slots 13, 19 and 25 comprises a cavity 15, 21 and 27 as well as a slit 17, 23 and 29 providing access to this cavity from the outside for mounting / dismounting components to be housed therein, as the previously described nut or light sources 37 and 39. As further indicated by section E in Fig. 8, the extrusions direction E of the platform side wall 7 corresponds to the longitudinal direction L of the platform 3.

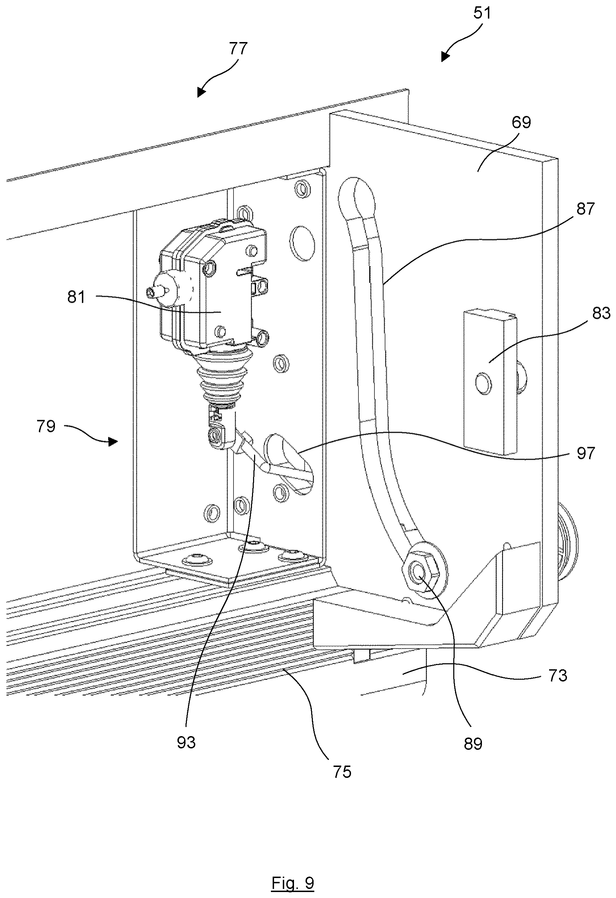

Fig. 9 shows a perspective view on section D of the bridge 51 of the foldable ramp 1 shown in Fig. 3, wherein the platform 3 is faded out to show the inside of the bridge 51.

The bridge 51 comprises an extrusion profile 73 with corrugated surface 75, a bridge side plate 69, a bridge rear plate 77, a reinforcing part 79 in form of a steel inlay 79 and an actuator 81 of a further locking mechanism. As previously mentioned, the pivot mechanism comprises a slide-rail arrangement, wherein the rail can be seen for instance in Fig. 7 while the slide 83 can be seen in Fig. 9. The slide 83 has a T-shaped cross section corresponding to a T-shaped cross section of a slide channel 85 in the rail 33 (see Fig. 7) to provide a defined clearance between slide 83 and rail 33 in width direction W. The bridge side plate 69 further comprises a curved groove 87 in which a pin 89 is arranged translationally movable to provide - in addition to the slide-rail arrangement - a pin-groove arrangement of the pivot mechanism 53. The pin 89 is connected to the rail 33, in particular by a mounting hole 91 (see Fig. 7) of the rail 33. Further, the actuator 81 is connected to a wire 93 for actuating locking means of the further locking mechanism. The wire extends through an elongated hole 97 of the reinforcing part 79 and through a hole 99 (see Fig. 7) of the bridge side plate 69, in particular for allowing to mount the locking means on the opposite side of the bridge side plate 69.

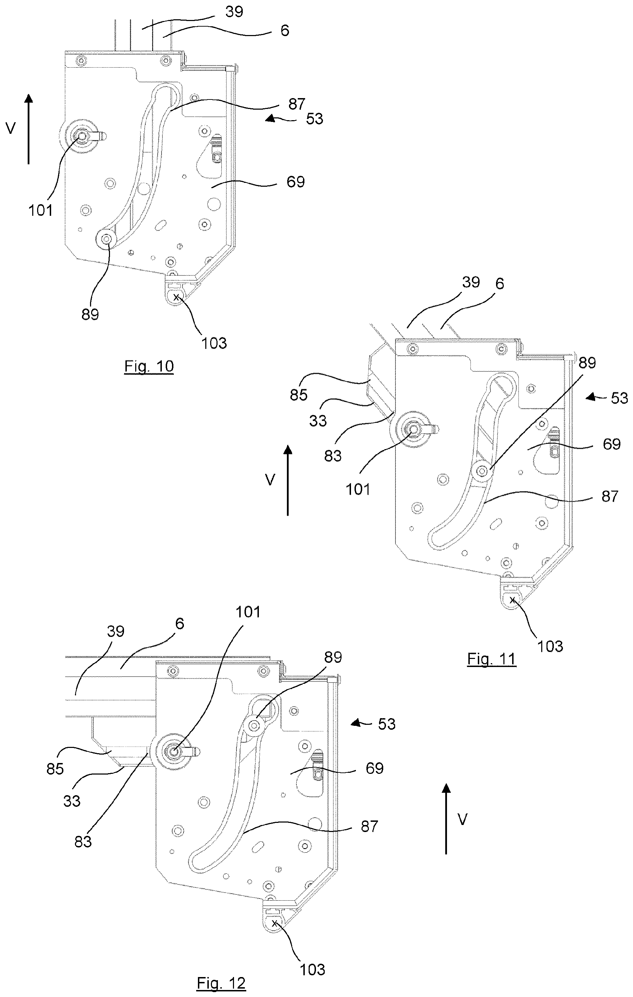

Fig. 10 to 12 show side views on section D of the foldable ramp shown in Fig. 3 to illustrate the functioning of the pivot mechanism 53 of the foldable ramp 1. In particular, Fig. 10 shows the platform 3 in transport position, Fig. 11 shows the platform 3 in an intermediate position between transport position and passive position and Fig. 12 shows the platform 3 in passive position. As can be seen, when the platform moves from the transport position to the passive position, the pin 89 of the pin groove arrangement moves along the curved groove 87. As the curved groove 87 extends in vertical direction and is implemented in the bridge side plate 69 which does not move between the transport and the passive position, the pin 89 moves in vertical direction V too. As the pin 89 is connected to the bridge side wall 7, the bridge side wall 7 moves in vertical direction V too. In other words, between the passive position and the transport position, the platform 3 conducts not only a rotational movement but also a translational movement, e.g. allowing in total a rotational translational movement. Thanks to the movement in vertical direction V, the platform 3 can be lowered when moving from the passive position to the transport position so that the ramp 3 comes closer to the ground from which a wheelchair accesses the ramp 3 in entry position. This allows the ramp to be arranged in a less steep angle to the ground making it easier for a wheelchair to access the ramp 3.

As can further be seen by the comparison of Fig. 10 to 12, when the platform 3 moves from the transport position to the passive position, the slide 83 moves translationally inside the rail 33 thus allowing a further translational movement component of the platform 3. As can be seen in Fig. 10 to 12, the slide 83 is rotatably connected to the bridge side plate 69 by a rotational bearing 101. For moving from the transport position (Fig. 10) into the entry position, the bridge 51 is rotatably mounted around a rotation axis 103 which is defined by a rotation shaft channel 105, which has in the present example a D-shaped cross section, for receiving a rotation shaft (not shown in Fig. 10 to 12).

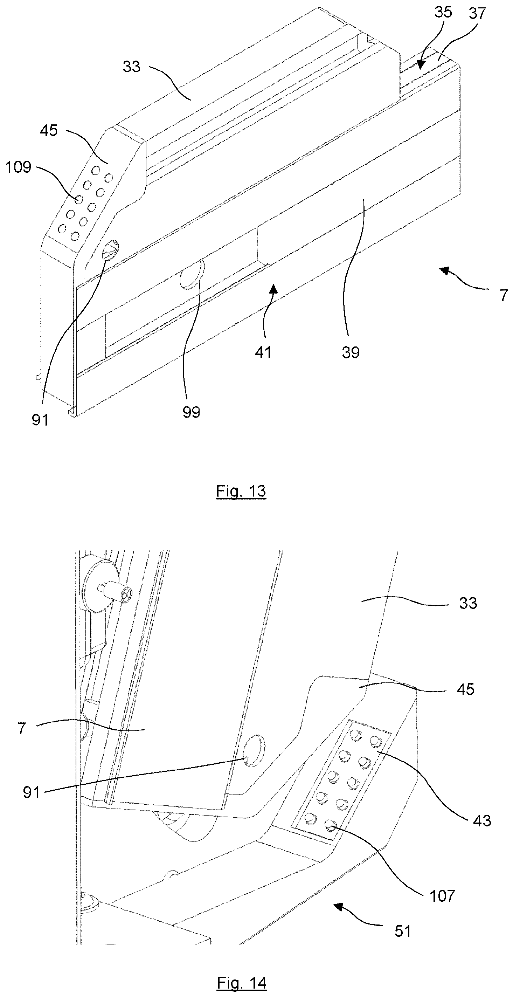

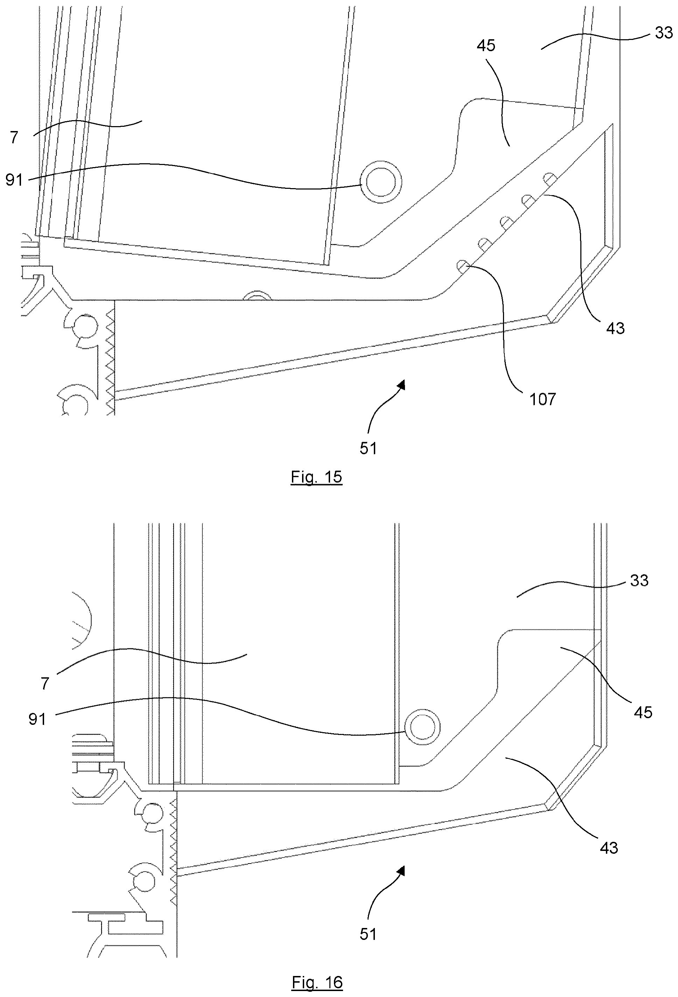

Fig. 13 shows a perspective view on section C of a second connector 45 on the platform side wall of the platform shown in Fig. 2 with a different perspective compared to Fig. 7 while Fig. 14 shows a perspective view on a first connector 43, wherein the connectors 43 and 45 are in disconnected state. The connectors 43 and 45 form a pair of connectors 43, 45 with a connected state (see Fig. 16) for connecting the light sources 37, 39 with an electric circuit and a disconnected state for disconnecting the light or sound sources 37, 39, wherein the pair of connectors 43, 45 are designed in that they are in connected state (see Fig. 16) in at least one position of the platform 3 between the entry position and transport position and in disconnected state (see Fig. 14 and 15) in at least one position of the platform 3 between the transport position and the passive position. Thereby, Fig. 13 to 16 illustrate the third aspect of the invention.

In the example of Fig. 13 to 16, the first connector 43 is connected to the bridge 51 and comprises a plurality of contact pins 107, wherein the second connector 45 is connected to the platform side wall 7, in particular to the rail 33 being connected to the platform side wall 7, and comprises female contact opening 109 corresponding to the contact pins 107 of the first connector 43 for establishing an electric connection between the first connector 43 and the second connector 45 (connected state), when the platform 3 is in transport position. By connecting the first connector 43 to the bridge 51 and the second connector 45 to the platform side wall 7, it can be ensured that the connectors 43 and 45 do not move relative to each other when the platform 3 transfers from the transport position to the entry position thereby making sure that the pair of connectors remain in connected state when the platform 3 moves from the transport position into the entry position and vice versa. This can be achieved inter alia in that the bridge 51 and the platform 3 are designed to not move relative to each other when transferring the platform 3 between the transport position and the entry position. Further, thanks to connecting one connector to the bridge 51 and one to the platform side wall 7, a relative movement between the bridge 51 and the platform side wall 7 can be used for switching between the connected state and the disconnected state.

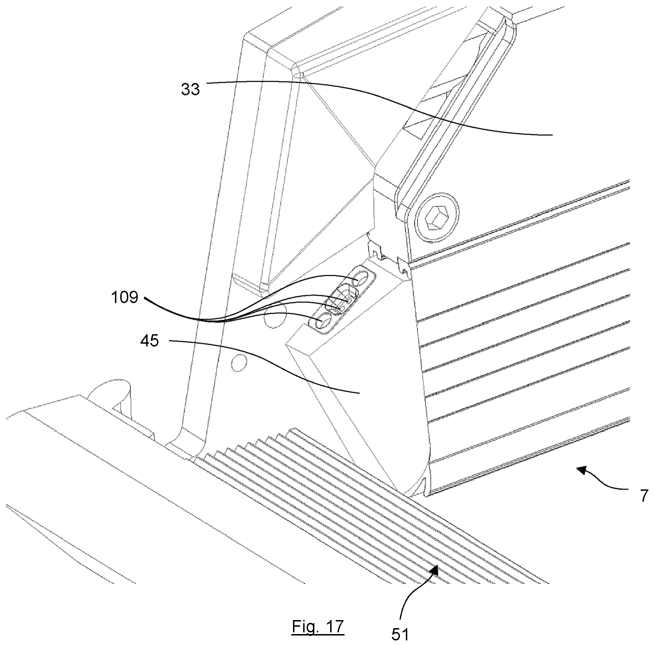

Fig. 17 shows a perspective view on an alternative connector 45 with four female contact openings 109 corresponding to four contact pins of a not shown four pin magnetic connector 43.

The features disclosed in the above description, the figures and the claims may be significant for the realization of the invention in its different embodiments individually as in any combination.

### List of Reference Signs:

- 1: Foldable ramp
- 3: Platform
- 5: Platform floor
- 7: Platform side wall
- 9: Notch
- 11: Sharp edge
- 13: Slot
- 15: Cavity
- 17: Slit
- 19: Slot
- 21: Cavity
- 23: Slit
- 25: Slot
- 27: Cavity
- 29: Slit
- 31: Connecting element
- 33: Rail
- 35: Top of platform side wall
- 37: Light source / LED strip
- 39: Light source / LED strip
- 41: Side / outside of platform side wall
- 43: Connector / first connector
- 45: Connector / second connector
- 47: Bottom of platform side wall
- 49: Floor of passenger car
- 51: Bridge
- 53: Pivot mechanism
- 55: Locking mechanism
- 57: Electric actuator
- 59: Plate
- 61: Wire
- 63: Locking means
- 65: Cover
- 67: Corrugated surface
- 69: Bridge side plate
- 71: Plastic profile
- 73: Extrusion profile
- 75: Corrugated surface
- 77: Bridge rear plate
- 79: Reinforcing part / Steel inlay
- 81: Actuator
- 83: Slide
- 85: Slide channel
- 87: Curved groove
- 89: Pin of pin-groove arrangement
- 91: Mounting hole
- 93: Wire
- 95: Emergency lever
- 97: Elongated hole
- 99: Circular hole
- 101: Rotational bearing
- 103: Rotation axis
- 105: Rotation shaft channel
- 107: Contact pins
- 109: Contact opening

- E: Extrusion Direction
- L: Longitudinal Direction
- H: Height Direction
- W: Width Direction
- T: Thickness Direction
- V: Vertical direction

## Claims

1. A foldable ramp (1) for wheelchair access to a passenger car rear door, comprising:
- a platform (3) which can be arranged in several positions including an entry position wherein the platform (3) is folded out of the car to allow wheelchair access to the car, a transport position wherein the platform (3) is arranged in the car in an upright position and a passive position wherein the platform (3) is arranged in the car in a lying position,
wherein the platform (3) comprises a platform floor (5) and at least one platform side wall (7) protruding from the platform floor (5);
**characterised in that**
the at least one platform side wall (7) and the platform floor (5) are separate parts.

2. The foldable ramp (1) according to claim 1, wherein the at least one platform side wall (7) is an extrusion profile, in particular an extrusion profile with I-shaped cross section in a plane extending orthogonal to the extrusion direction (E), and/or wherein the at least one platform side wall (7) comprises at least one notch (9) for covering an, in particular sharp, edge (11) of the platform floor (5).

3. The foldable ramp (1) according to any of the claims 1 or 2, wherein the at least one platform side wall (7) comprises at least one slot (13) for connecting the platform floor (5) with the platform side wall (7), in particular wherein the slot (13) carries at least one nut and wherein the platform side wall (7) is connected with the platform floor (5) by connecting means (31), in particular by screws (31), extending through the platform floor (5) and engaging, in particular being screwed into, said at least one nut.

4. The foldable ramp (1) according to any of the claims 1 to 3, wherein the at least one platform side wall (7) comprises at least one slot (19) for connecting the platform side wall (7) with a rail, in particular with a rail (33) of a slide-rail arrangement of a pivot mechanism of the foldable ramp (1), in particular wherein the rail (33) is connected to the top (35) of the at least one platform side wall (7).

5. The foldable ramp (1) according to any of the claims 1 to 4, wherein the side wall (41) comprises at least two slots (13, 19), preferably on opposite sides of the platform side wall (7), in particular wherein the at least one platform side wall (7) extends along a longitudinal direction (L) parallel to the platform floor (5) and along a height direction (H) orthogonal to the platform floor (5), wherein the two slots (13, 19) are located on opposite sides of the platform side wall (7) in height (H) direction, in particular one slot (19) on the top (35) an one slot (13) on the bottom (47) of the platform side wall (7).

6. The foldable ramp (1) according to any of the claims 1 to 5, wherein the at least one platform side wall (7) comprises at least one, preferably at least two, slots (19, 25) for carrying a light source (37, 39), in particular an LED strip (37, 39), in particular wherein one slot (37) is located on the top (35) of the at least one side wall (7) and/or one slot is located on a side (39), in particular the side facing away from a person on the platform, of the at least one platform side wall (7).

7. A foldable ramp (1), in particular according to any of the preceding claims, for wheelchair access to a passenger car rear door, comprising:
- a platform (3) which can be arranged in several positions including an entry position wherein the platform (3) is folded out of the car to allow wheelchair access to the car, a transport position wherein the platform (3) is arranged in the car in an upright position and a passive position wherein the platform (3) is arranged in the car in a lying position,
wherein the platform comprises a platform floor (5) and at least one platform side wall (7) protruding from the platform floor; and
at least one light source (37, 39) or sound source,
**characterised in that**
the at least one light source (37, 39) or sound source is located at the at least one platform side wall (7).

8. The foldable ramp (1) according to claim 7, wherein the at least one light source (37, 39) is located on the top of the at least one platform side wall and/or wherein the at least one light source (39) is located on a side (39), in particular the side (39) facing away from a person on the platform, of the at least one platform side wall.

9. The foldable ramp (1) according to one of the claims 7 to 8, wherein the foldable ramp (1) comprises at least two light sources (37, 39) at each platform side wall (7), in particular wherein a first light sources (37) of the at least two light sources is located on the top (35) of the at least one platform side wall (7), wherein a second light source (39) of the at least two light sources is located on a the side (41) of the at least one platform side wall (7) facing away from a person on the platform.

10. The foldable ramp (1) according to any of the claims 7 to 9, wherein the at least one light source (37, 39) or sound source emits a light or sound signal in at least one of the following scenarios:
a) the platform (3) moves from the transport position to the entry position or vice versa,
b) the platform (3) is ready to accept a wheelchair,
c) a load measurement arrangement of the foldable ramp (1) detects platform load or overload, or
d) the platform is not secured.

11. The foldable ramp (1) according to any of the claims 7 to 10, wherein the at least one light source (37, 39) is a LED light source (37, 39) and/or has the shape of a strip, in particular is a LED strip (37, 39).

12. A foldable ramp (1), in particular according to any of the preceding claims, for wheelchair access to a passenger car rear door, comprising:
- a platform (3) which can be arranged in several positions including an entry position wherein the platform (3) is folded out of the car to allow wheelchair access to the car, a transport position wherein the platform (3) is arranged in the car in an upright position and a passive position wherein the platform (3) is arranged in the car in a lying position,
wherein the platform preferably comprises a platform floor (5) and preferably at least one platform side wall (7) protruding from the platform floor, and
at least one light source (37, 39) or sound source,
**characterised by**
at least one pair of connectors (43, 45) with a connected state for connecting the light or sound source with an electric circuit and a disconnected state for disconnecting the light or sound source and the electric circuit, wherein the pair of connectors are designed in that they are in connected state in at least one position of the platform (3) between the entry position and transport position and in disconnected state in at least one position of the platform (3) between the transport position and the passive position.

13. The foldable ramp (1) according to claim 12, wherein the at least one pair of connectors (43, 45), comprises a first connector (43) being fixedly connected to a bridge of the foldable ramp (1) and a second connector (43) being fixedly connected to the platform (3), in particular to a side wall (7) of the platform (3).

14. The foldable ramp (1) according to claim 12 or 13, wherein the pair of connectors (43, 45) are in contact with each other to establish the connected state in any position of the platform (3) between the transport position and the entry position, and wherein the pair of connectors (43, 45) are spaced from each other in the passive position of the platform (3).

15. The foldable ramp (1) according to any one of the claims 12 to 14, wherein the at least one pair of connectors (43, 45) comprises magnetic means and/or biasing means for urging the connectors (43, 45) against each other in the connected state.
